# EUROPEAN PATENT APPLICATION

(11) **EP 0 952 059 A1**
(43) Date of publication of application: **27.10.1999**
(21) Application number: 98303169.1
(22) Date of filing: 24.04.1998
(51) Int. Cl.: B60T 11/10

(54) **Park brake mechanism for trailer overrun brake**

(71) Applicant: Holmes, Gordon, South Shields, Tyne & Wear NE33 4BZ (GB)
(72) Inventor: Holmes, Gordon, South Shields, Tyne & Wear NE33 4BZ (GB)
(74) Representative: Sanderson, Michael John

(57) **Abstract**

Upon over-run of a trailer, a piston (14) is actuated to force the wedges (5,7) together whereby the pads (2,4) grip the disc (3) to actuate the brake. On reversal of the trailer, the wedges (5,7) permit a reduction in the braking force between the pads (2,4) and the disc (3). A parking brake mechanism can be selectively actuated to maintain the full braking force in situations where it would otherwise be reduced, the mechanism including an operating member (8) movable into an operative position applying an axial force to one of the pads (4) whereby said full braking force is applied to the disc (3).

## Description

The present invention relates to a mechanical parking brake mechanism for an over-run auto-reverse hydraulic braking system on a trailer.

Fundamental considerations of road safety require that, when a road going vehicle such as a trailer is disconnected from the towing vehicle, a mechanical parking brake must be applied, otherwise there is a danger of a trailer moving from its parking place. The mechanical brake mechanism must also be capable of being applied automatically should the trailer become disconnected during towing, for example, by means of a break-away cable which would be secured to the rear of the towing vehicle and the base of the trailer's parking brake lever. Thus, should the trailer become disconnected during towing, the break away cable would pull tight, therefore applying the trailer's parking brake mechanism and thus reducing the distance the trailer is able to travel while disconnected from the towing vehicle.

In my UK patent number 2278900 there is described an over-run, auto-reverse hydraulic disc braking system on a trailer, comprising a rotatable brake disc on the trailer, and a movable calliper mounted on the trailer carrying a pair of brake pads one to each side of the disc, and a hydraulically-actuated piston, the arrangement being such that, on the application of hydraulic fluid under pressure to the piston, the first brake pad is urged by the piston into engagement with the disc, the movable mounting of the calliper ensuring that an even braking pressure is subsequently applied to the disc by both brake pads, the face of the other brake pad remote from the disc being inclined to the plane of the disc, and the calliper including a correspondingly inclined face with which said inclined face of the other brake pad abuts, the first brake pad being guided for axial movement towards and away from the disc, and the other brake pad being guided for axial movement towards and away from the disc and for limited angular movement in the direction of reverse rotation of the disc such that, on reverse rotation of the disc with the brake actuated, the disc moves the other brake pad under friction whereby the inclined face of the other brake pad is released from pressurised engagement with the inclined face of the calliper and the braking pressure on the disc is reduced.

Such a braking system requires a mechanical parking brake mechanism which will override/eliminate any forces which may induce the activation of the disc brake's auto-reverse mechanism operating while the parking brake is in the on position. For example, should a trailer/caravan be parked facing up a gradient and the trailer/caravan meet with a force going down the gradient, this force may activate the trailer/caravan auto-reverse mechanism within its hydraulic disc braking system, thereby reducing the parking brake's effectiveness.

According to the present invention, there is provided a parking brake mechanism for an over-run, auto-reverse hydraulic disc braking system on a trailer, the over-run, auto-reverse hydraulic braking system comprising a rotatable brake disc on the trailer, and a movable calliper mounted on the trailer carrying a pair of brake pads one to each side of the disc, and a hydraulically-actuated piston, the arrangement being such that, on the application of hydraulic fluid under pressure to the piston, the brake pads are urged into engagement with the disc, the movable mounting of the calliper ensuring that an even braking pressure is subsequently applied to the disc by both brake pads, at least part of the face of one of the brake pads remote from the disc being inclined to the plane of the disc, and the calliper including a correspondingly inclined face with which said inclined face of the one brake pad abuts, the other brake pad being guided for axial movement towards and away from the disc and for limited angular movement in the direction of reverse rotation of the disc such that, on reverse rotation of the disc with the brake actuated, the disc moves the one brake pad under friction whereby the inclined face of the one brake pad is released from pressurised engagement with the inclined face of the calliper and the braking pressure on the disc is reduced, characterised in that the parking brake mechanism comprises an operating member movable between an inoperative position and an operative position in which the operating member applies an axial force to the one brake pad whereby angular movement of said one brake pad is prevented and a braking force is retained on the disc.

By way of example only, an embodiment of the invention will now be described in greater detail with reference to the accompanying drawings of which:
Fig. 1 is a plan view of a parking brake mechanism according to the invention;
Fig. 2 shows the rear of the calliper of the mechanism of Fig. 1, and
Fig. 3 shows a pinned support plate for a parking brake mechanism of the invention.

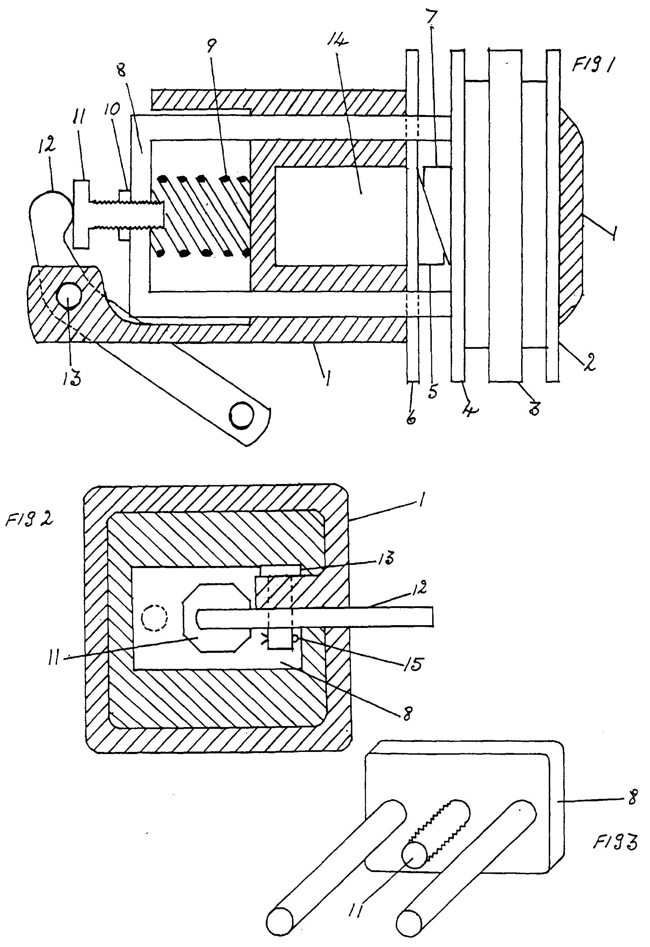

Referring to the drawings, the calliper body 1 would be secured to the brake calliper and disc pad carrier (not shown) when the trailer's parking brake is applied whether the trailer is stationary or the parking brake has been applied due to the trailer becoming disconnected from the towing vehicle. Whilst towing, the parking brake lever (not shown) will be operated in such a way as to pull the parking brake cable (not shown) tight.

This movement of the parking brake cable will turn parking brake operating arm 12. Parking brake operating arm 12 would be secured to clevis pin or bolt 13. The pins secured to support plate 8 pass through support plate 6 which has wedge 5 secured to it. The pins secured to support plate 8 abut disc pad 4 backing plate which has wedge 7 secured to it. Support plate 6 and disc pads 2 and 4 are retained in brake disc pad and calliper carrier (not shown). Calliper body 1 is secured to calliper and brake disc pad carrier in such a way as to equalise any axial force applied to disc pads 4 whether by hydraulic or mechanical means. Therefore any axial movement of pinned support plate 8 which applies a force to disc pad 4 would apply an equal force to disc pad 2. This braking force would be transferred to brake disc 3 thereby applying the towing vehicle's parking brake. As this mechanical parking brake mechanism operates independently of the towing vehicle's auto-reverse hydraulic braking system, any movement of the towing vehicle which would activate the main brake's auto-reverse mechanism into releasing the brake has been eliminated.

To compensate for disc pad wear, provision would be made so that the parking brake cable (not shown) could be adjusted. In addition to parking brake cable adjustment, provision has also been made to adjust the mechanical mechanism within the brake disc calliper body 1 by releasing lock nut 10 and adjusting bolt 11 by the required amount. Return spring 9 will assist in the return of pinned support plate 8 when parking brake lever (not shown) is released.

### KEY TO DRAWINGS

### MECHANICAL PARKING BRAKE MECHANISM FOR OVER-RUN AUTO-REVERSE HYDRAULIC BRAKING SYSTEM ON A TRAILER

Calliper body 1
Disc Pad 2
Brake disc 3
Disc pad 4 with wedge 7
Wedge 5 with support plate 6
Support plate 6 with wedge 5
Wedge 7 with disc pad 4
Pinned support plate 8
Return spring 9
Lock nut 10
Adjusting bolt 11
Parking brake operating arm 12
Clevis pin or bolt 13
Hydraulic piston 14
Split pin 15

## Claims

1. A parking brake mechanism for an over-run, auto-reverse hydraulic disc braking system on a trailer, the over-run, auto-reverse hydraulic braking system comprising a rotatable brake disc (3) on the trailer, and a movable calliper (1) mounted on the trailer carrying a pair of brake pads (2,4) one to each side of the disc (3) and a hydraulically-actuated piston (14), the arrangement being such that, on the application of hydraulic fluid under pressure to the piston (14), the brake pads (2,4) are urged into engagement with the disc (3), the movable mounting of the calliper (1) ensuring that an even braking pressure is subsequently applied to the disc (3) by both brake pads (2,4), at least part of the face of one of the brake pads (4) remote from the disc (3) being inclined to the plane of the disc (3), and the calliper (1) including a correspondingly inclined face with which said inclined face of the one brake pad (4) abuts, the other brake pad (2) being guided for axial movement towards and away from the disc (3) and for limited angular movement in the direction of reverse rotation of the disc (3) such that, on reverse rotation of the disc (3) with the brake actuated, the disc (3) moves the one brake pad (4) under friction whereby the inclined face of the one brake pad (4) is released from pressurised engagement with the inclined face of the calliper (1) and the braking pressure on the disc (3) is reduced, characterised in that the parking brake mechanism comprises an operating member (8) movable between an inoperative position and an operative position in which the member (8) applies an axial force to the one brake pad (4) whereby angular movement of said one brake pad (4) is prevented and a braking force is retained on the disc (3).

2. A parking brake mechanism as claimed in claim 1 in which the operating member (8) is actuated by means of a pivotal lever (12).

3. A parking brake mechanism as claimed in claim 2 and further comprising a break-away cable extending between the trailer and a towing vehicle and interconnected with the pivotal lever (12) such that, on breakage of said cable during towing, the operating member (8) is moved to its operative position.

4. A parking brake mechanism as claimed in any one of claims 1 to 3 in which the operating member (8) is resiliently biased into its inoperative position in which no axial force is applied thereby to the one brake pad (4).

5. A parking brake mechanism as claimed in any one of claims 1 to 4 in which the operating member (8) is movable axially between its inoperative and operative position.

6. A parking brake mechanism as claimed in claim 5 in which the operating member comprises a support plate (8) substantially parallel with the brake disc (3) and from which plate extend a plurality of pins each adapted to engage with the face of the one brake pad (4) remote from the disc (3) whereby the application of a force to the support plate (8) directed axially of the disc (3) results in movement of the operating member (8) to its operative position and actuation of the brake.

7. A parking brake mechanism as claimed in any one of claims 1 to 6 in which the position of the operating mechanism (8) is adjustable to accommodate wear of the brake pads (2,4).
